# EUROPEAN PATENT APPLICATION

(11) **EP 4 520 164 A1**
(43) Date of publication of application: **12.03.2025**
(21) Application number: 24198901.1
(22) Date of filing: 06.09.2024
(51) Int. Cl.: A01G 9/02, A01G 9/029, A01G 24/25

(54) **WATERPROOF BIODEGRADABLE COIR POT WITH NATURAL SPECIAL WATERPROOF COATING**

(30) Priority: 08.09.2023 LK 2322822
(71) Applicant: Toyo Cushion Lanka (PVT) LTD, 10 Colombo (LK)
(72) Inventor: ABEYWARDENE, Bambarande Gamage Harsha, Ragama (LK)
(74) Representative: Schaad, Balass, Menzl & Partner AG

(57) **Abstract**

A coir pot for indoor horticultural applications having an inner surface
wherein the inner surface is at least partially covered with a coating layer,
wherein said coating layer comprises at least a crosslinked latex, clay and a non-ionic surface-active agent,
wherein the weight-ratio of crosslinked latex to clay is between 3:1 and 1:1.

## Description

The present invention relates to a waterproof biodegradable coir pot with natural special waterproof coating.

The traditional coir pot, commonly known as a coco coir pot, has been widely used in horticulture and gardening for many years. These pots are made from coconut coir, which is the fibrous material extracted from the outer husk of coconuts. The manufacturing process typically involves heat molding and compressing the rubberized coir sheets. The rubberized coir sheets are made by layering the natural coir and bonded by natural latex. These sheets are cut into specific sizes for different sizes of pots that are going to be created by heat molding.

Traditional coir pots, widely used for their biodegradable nature have inherent pores / micro-pores that allow water to pass through the walls, leading to water and nutrition loss and potential damage to surrounding surfaces where they are placed. Therefore, traditional coir pots are not well suited for indoor horticulture applications.

The traditional coir pot, with its inherent pores, may allow roots to grow and penetrate through its walls as they search for nutrients and moisture which may cause the plant to have transplant shock during the transplantation stage.

CZ 297039 B6 discloses a planting pot made from coconut nonwoven material comprising a fiber binder. The planting pot utilizes an air-permeable porous dried wet laid nonwoven material, which allows for unimpeded rooting of the plant. The planting pot focuses on creating an air-permeable, biodegradable planting pot with a specific nonwoven material composition and binder. It aims to address issues related to poor rotting behavior and rooting problems associated with traditional nonwoven materials containing latex as a binder.

IN 202211030648 discloses a coir-based pot composition and a method for constructing the coir-based pots. It refers to a method for preparing coir-based pots and primarily focus on the composition of the coir-based pot, which includes a specific ratio of coconut husk and rice husk, along with the addition of natural resins or adhesives. The method described pertains to the preparation of the pot using the specified ingredients and steps.

CA 2647918 A1 discloses a coir pot with natural latex layer with the purpose to improve the sturdiness / toughness/ durability of the pot.

KR 100987000 B1 discloses a coir mesh pot for raising young seedlings, manufactured using compression molding with jute overlapped on the outside of coir. The focus is on simplifying the planting process and reducing labour force by standardizing the coir mesh pot. The advantages described in the invention relate to the integration of coir and jute to prevent void generation and maintain the form of the flowerpot during the cultivation of seedlings.

None of the cited prior art documents discloses a coir pot that is suitable for indoor applications, since plants in these coir pots undergo transplant shock and have water stress.

Therefore, an object of the invention is to overcome the disadvantages of the prior art and to provide a coir pot that reduces transplant shock, minimizes water stress, enhances plant growth, ensures biodegradability and reduces environmental impact.

The problem is solved by a coir pot according to Claim 1 and a production process for a coir pot according to Claim 6. Preferred embodiments are part of the dependent Claims.

The invention refers to a coir pot for indoor horticultural applications having an inner surface wherein the inner surface is at least partially covered with a coating layer. Said coating layer comprises at least a crosslinked latex, clay and a non-ionic surface-active agent, wherein the weight-ratio of crosslinked latex to clay is between 3:1 and 1:1.

In the context of the invention the term "inner surface" refers to the inner surface of the coir pot, including the respective lateral surface of the coir pot as well as the respective surface of the bottom of the coir pot.

It has surprisingly been found that the inventive coir pot coated with a coating layer provides remarkable waterproofing capabilities, reduces transplant shock, minimizes water stress, enhances plant growth, ensures biodegradability and reduced environmental impact.

While the traditional coir pot allows roots to grow through its walls in search of nutrients and moisture due to its inherent pores, the inventive coir pot with the coating layer presents a barrier that prevents root penetration. As a result, the roots are confined within the pot's interior, without extending beyond its boundaries. The contained root growth leads to reduced transplant shock during transplantation since the roots remain undisturbed and less prone to damage or disruption. This reduced stress on the plant can contribute to healthier and more successful transplanting.

In traditional pots, water stress can occur when the soil dries out quickly due to seepage through the wall. Water stress negatively impacts plant growth, leading to wilting, nutrient deficiencies, and reduced vigor. The inventive coir pot helps to minimize water stress by retaining the moisture inside the pot for a long period, thereby reducing the risk of dehydration, requiring less frequent watering, and maintaining the plant's health.

The coir pot is designed to retain moisture within the pot, preventing water from leaking out, thereby maintaining a more consistent and stable moisture level around the plant's roots. This is essential for the biological processes of the plant and creates an optimal environment for plant growth. Hence, the inventive coir pot is also well-suited for nurturing delicate and sensitive plants that require precise and consistent moisture levels within controlled indoor environments.

Finally, the eco-friendly coating, ensures biodegradability and reduced environmental impact.

In a preferred embodiment of the invention the weight-ratio of crosslinked latex to clay is between 2.5:1 and 2:1, more preferably between 2.2:1 and 2.1:1. It has surprisingly been found that this ratio of crosslinked latex to clay ensures that the coated coir pot has improved waterproofing capabilities.

Preferably the coating layer further comprises an additive selected from the group consisting of fragrance, dye, tebuconazole and combinations thereof. The addition of a fragrance or a dye to the special latex formulation improves the visual and olfactory presence of the coir pot in an indoor environment. For example, the addition of a vanilla fragrance can minimize the unpleasant odor of latex, whereas the addition of a dye can be used to match the natural color of the coir. The addition of tebuconazole ensures that in the humid environment of the coir pot the growth of unwanted fungi is prevented.

In a preferred embodiment of the invention the coating layer has a thickness of 0.3 - 0.7mm and more preferably about 0.5mm. It has been found that the above-mentioned thickness range are ideal for keeping the coir pot waterproof while providing adequate production costs.

Preferably, the inner surface of the coir pot is at least partially covered with the coating layer. The coating of the inner surface has the benefit of requiring less coating material and therefore being less expensive.

In a preferred embodiment of the invention the coir pot has a bottom and an upper end, and the coating layer extends from the bottom to the upper end over at least 1/2 of the height, preferably over at least 2/3 of the height. Since the provided water tends to accumulate at the lower end of the coir pot due to its weight the coating of only the lower half or the lower 2/3 of the coir pot has the advantage that the part of the coir pot that for the most time in contact with the water is also coated to provide the remarkable waterproofing capabilities.

In a preferred embodiment of the invention the non-ionic surface-active agent in the coating layer is Wettem and more preferably Wettem 9938. It has surprisingly been found that the non-ionic surface-active agent from the brand Wettem and especially the product Wettem 9938 works excellent as a non-ionic surface-active agent.

The invention further refers to a process for preparing a coir pot for indoor horticultural applications, preferably a coir pot according to one of the Claims 1 to 5. The process comprises a first step of providing a coir pot having an inner surface. In a second step a latex formulation comprising at least latex, clay, a non-ionic surface-active agent and a crosslinking agent selected from the group consisting of zinc oxide, sulfur, zinc diethyldithiocarbamate, sulphonic acid and zinc-2-mercaptobenothiazole or combinations thereof is provided. In a third step the inner surface of the coir pots of the first step is coated with a latex formulation of the second step. In a fourth step the coated coir pots of the third step is dried for 30 - 120 min at 90 - 150 °C to crosslink the latex. In a fifth step, the steps three and four are repeated once.

It has surprisingly been found that the inventive process to produce a coir pot coated with a coating layer provides a coir pot with remarkable waterproofing capabilities, that reduces transplant shock, minimizes water stress, enhances plant growth, and ensures biodegradability and reduces environmental impact.

In a preferred embodiment of the invention the process further comprises a selection sub step in the first step, wherein the coir pot is illuminated with a light source of more than 500 lux to detect if light penetrates through the uncoated coir pot and only coir pots are selected for subsequent coating, where no light penetration was detected. This sub step has the advantage that only coir pots are further selected for coating that already have a very compact structure. This decreases the overall production costs since no coir pots with weak structure are coated that might later be sorted out in a quality check.

Preferably the latex formulation further comprises potassium hydroxide. Potassium hydroxide works as a buffer system to stabilizes the pH conditions in an acceptable range.

In a preferred embodiment of the invention the non-ionic surface-active agent in the latex formulation is Wettem and more preferably Wettem 9938. It has surprisingly been found that the non-ionic surface-active agent from the brand Wettem and especially the product Wettem 9938 works excellent as a non-ionic surface-active agent.

Preferably the latex formulation further comprises 2,2,4-trimethyl-1,2-dihydroquinoline. The provision of 2,2,4-trimethyl-1,2-dihydroquinoline to the latex formulation has been beneficial since 2,2,4-trimethyl-1,2-dihydroquinoline is highly effective in scavenging free radicals and therefore improves the protection against oxidation. Furthermore, the provision of 2,2,4-trimethyl-1,2-dihydroquinoline to the latex formulation also improves the resistance to heat-induce aging.

In a preferred embodiment of the invention the latex formulation further comprises a mixture comprising oleic acid and potassium hydroxide. Oleic acid and potassium hydroxide react to potassium oleate which acts as an emulsifying agent.

Preferably the clay comprises at least kaolin, more preferably wherein the clay comprises at least kaolin and sulphonic acid condensation. The provision of kaolin reduces the production costs, since the kaolin functions as a filler, enhances the strength and durability of the latex formulation and reduces the shrinkage of the coating layer. Furthermore, the provision of sulphonic acid condensation helps to distribute the koalin better in the latex formulation and therefore improves the stability of the coating layer.

### Experimental data

First, a coir pot is obtained, and a light source with an intensity exceeding 500 LUX is used to visually identify pots that allow minimal light penetration. These pots are then selected for further processing. In a second step a coating layer is applied to the inner surface of the selected pots. The coating layer is made the following latex formulation:

| **Product name** | **Composition** | **Concentrati on in wt%** |
|---|---|---|
| Latex (RL1) | centrifuge latex | 36.43 |
| Soop | 18 wt% oleic acid | 0.22 |
| | 3 wt% potassium hydroxide | |
| | 79 wt% water | |
| KOH (RC0004) | Potassium hydroxide | 0.22 |
| Wettem (RC0014) | Wettem 9938 (non-ionic surface-active agent) | 0.44 |
| Mix J | 28 wt% zinc oxide | 2.62 |
| | 17 wt% sulfur | |
| | 6 wt% zinc diethyldithiocarbamate | |
| | 0.3 wt% sulphonic acid condensation | |
| | 48.7 wt% water | |
| RC0009 | Zinc 2-mercaptobenzothiazole | 0.16 |
| RC0010 | 2,2,4-trimethyl-1,2-dihydroquinoline | 0.33 |
| Clay | 44 wt% kaolin | 16.91 |
| | 1 wt% sulphonic acid condensation | |
| | 55 wt% water | |
| Water | Water | 42.54 |
| RC0029 | Vanilla fragrance | 0.01 |
| Brown FGR | Dye | 0.10 |
| Folicure | Folicure tebuconazole | 0.03 |
| Clay was purchased from Lanka Clay Powder & Lanka Minerals. All other compounds were purchased from Glorchem Enterprise, Multyway Chemicals, Chemanex, Jayes Trading Company, Chemtech, Lanka Clay Powder, Lanka Minerals or Inso depending on availability. | | |

In a third step, the coated pods are dried and cured for approximately 1 hour at a temperature of 110-120 °C. Afterwards the pots are allowed to cool down to room temperature in an open, ventilated place.

In a fourth step, the steps two (coating) and three(drying) are repeated once. The final thickness of the coating layer measures approximately 0.5mm after the second drying.

## Claims

1. A coir pot for indoor horticultural applications having an inner surface
wherein the inner surface is at least partially covered with a coating layer,
wherein said coating layer comprises at least a crosslinked latex, clay and a non-ionic surface-active agent,
wherein the weight-ratio of crosslinked latex to clay is between 3:1 and 1:1.

2. Coir pot according to Claim 1, wherein the weight-ratio of crosslinked latex to clay is between 2.5:1 and 2:1.

3. Coir pot according to one of the Claims 1 or 2, wherein the coating layer further comprises an additive selected from the group consisting of fragrance, dye, tebuconazole and combinations thereof.

4. Coir pot according to one of the Claims 1 to 3, wherein the coating layer has a thickness of 0.3 - 0.7mm and more preferably about 0.5mm.

5. Coir pot according to one of the Claims 1 to 4, wherein the coir pot has a bottom and an upper end and wherein the coating layer extends from the bottom to the upper end over at least 1/2 of the height, preferably over at least 2/3 of the height.

6. Coir pot according to one of the Claims 1 to 5, wherein the non-ionic surface-active agent is Wettem and preferably Wettem 9938.

7. Process for preparing a coir pot for indoor horticultural applications, preferably a coir pot according to one of the Claims 1 to 12, comprising the steps:
a) Providing a coir pot having an inner surface;
b) Providing a latex formulation comprising at least latex, clay, a non-ionic surface-active agent and a crosslinking agent selected from the group consisting of zinc oxide, sulfur, zinc diethyldithiocarbamate, sulphonic acid and zinc-2-mercaptobenothiazole or combinations thereof,
c) Coating the inner surface of the coir pots of step a) with a latex formulation of step b);
d) Drying the coated coir pots of step c) for 30 - 120min at 90 - 150 °C to crosslink the latex;
e) Repeating steps c) and d) once.

8. Process according to claim 7, wherein in step a) the coir pot is illuminated with a light source of more than 500 lux to detect if light penetrates through the uncoated coir pot and to select a coir pot for subsequent coating, where no light penetration was detected.

9. Process according to one of the Claims 7 or 8, wherein the latex formulation further comprises potassium hydroxide.

10. Process according to one of the Claims 7 to 9, wherein the non-ionic surface-active agent is Wettem and preferably Wettem 9938.

11. Process according to one of the Claims 7 to 10, wherein the latex formulation further comprises 2,2,4-trimethyl-1,2-dihydroquinoline.

12. Process according to one of the Claims 7 to 11, wherein the latex formulation further comprises a mixture comprising oleic acid and potassium hydroxide.

13. Process according to one of the Claims 7 to 12, wherein the clay comprises at least kaolin, more preferably wherein the clay comprises at least kaolin and sulphonic acid condensation.
